# EUROPEAN PATENT SPECIFICATION

(11) **EP 2 993 565 B1**
(45) Date of publication and mention of the grant of the patent: **04.08.2021**
(21) Application number: 13829031.7
(22) Date of filing: 28.08.2013
(51) Int. Cl.: G06F 3/041

(54) **TOUCHSCREEN, LIQUID CRYSTAL DISPLAY APPARATUS, AND INFRARED MATERIAL SURFACE MODIFICATION METHOD**
BERÜHRUNGSBILDSCHIRM, FLÜSSIGKRISTALLANZEIGEVORRICHTUNG UND OBERFLÄCHENMODIFIZIERUNGSVERFAHREN FÜR INFRAROT-MATERIAL
ÉCRAN TACTILE, APPAREIL À ÉCRAN À CRISTAUX LIQUIDES ET PROCÉDÉ DE MODIFICATION DE SURFACE DE MATÉRIAU INFRAROUGE

(30) Priority: 28.04.2013 CN 201310157510
(43) Date of publication of application: 09.03.2016
(73) Proprietor: Beijing BOE Optoelectronics Technology Co., Ltd., Beijing 100176 (CN); BOE Technology Group Co., Ltd., Beijing 100015 (CN)
(72) Inventor: YANG, Jiuxia, Beijing 100176 (CN); BAI, Feng, Beijing 100176 (CN); LI, Hongyan, Beijing 100176 (CN); ZHAO, Yiming, Beijing 100176 (CN); BAI, Bing, Beijing 100176 (CN); SUN, Xiao, Beijing 100176 (CN)
(74) Representative: Klunker IP Patentanwälte PartG mbB
(86) International application number: PCT/CN2013/082488
(87) International publication number: WO 2014/176849

(56) References cited:
- CN-A- 102 156 600
- CN-A- 102 866 807
- US-A1- 2010 060 612
- US-A1- 2010 171 076
- None

## Description

### FIELD OF THE ART

The present invention relates to the field of liquid crystal technologies, more particularly, to a touch panel, a Liquid Crystal Display (LCD) device, a surface modification method for an Infrared (IR) material, and a touch panel provided with a component comprising an IR material obtained via the surface modification method.

### BACKGROUND

With the rapid development of display technologies, people expect display devices to provide display effect with high definition, high contrast ratio and high brightness; moreover, there are more diverse requirements on the functions of the display devices, such as entertaining and healthy functions.

US 2010/0060612 A, discloses an opto-touch screen, the opto-touch panel includes an infrared phosphor material emitting light when exposed to infrared light.

US 2010/0171076 A discloses a method for manufacturing near-infrared light-emitting phosphor nanoparticles.

### SUMMARY

It is an object of the invention to provide a touch panel, a surface modification method for an IR material and a IR material obtained via the surface modification method, so as to emit IR light.

The object is achieved by the features of the respective independent claims. Further embodiments are defined in the respective dependent claims.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.

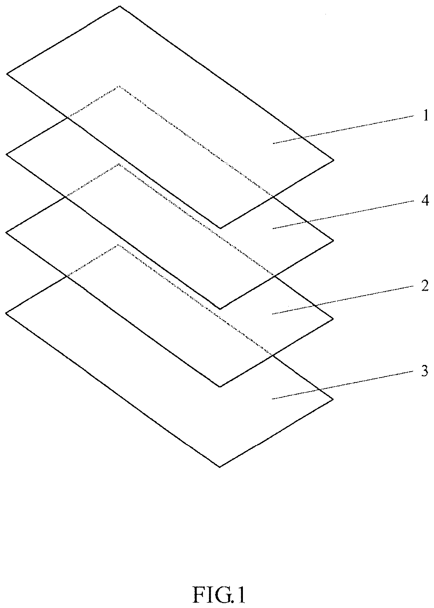

Fig. 1 schematically illustrates a configuration of a touch panel in accordance with an embodiment of the invention.

### Numeral References:

1-cover plate; 2- touch sense layer; 3-display unit layer; 4-IR layer.

### DETAILED DESCRIPTION

In order to make objects, technical details and advantages of the embodiments of the invention apparent, the technical solutions of the embodiment will be described in a clearly and fully understandable way in connection with the drawings related to the embodiments of the invention. It is obvious that the described embodiments are just a part but not all of the embodiments of the invention. Based on the described embodiments herein, those skilled in the art can obtain other embodiment(s), without any inventive work, which should be within the scope of the invention, as defined by the appended claims.

An embodiment of the invention provides a touch panel, which has a component comprising an IR material disposed therein. For example, the component comprising the IR material is an IR layer made of the IR material. It will be described in detail with reference to Fig. 1.

Fig. 1 illustrates a touch panel in accordance with an example of the invention, which comprises a cover plate 1, a touch sense layer 2, a display unit layer 3, and an IR layer 4. The touch sense layer 2 may be a single layer structure provided with a lateral sense electrode, a longitudinal sense electrode and the like. Of course, the touch sense layer 2 may also be a multilayer structure with a lateral sense electrode disposed in one layer and a longitudinal sense electrode disposed in another layer. Moreover, the touch sense layer 2 may be provided with other sensing elements. The display unit layer 3 comprises an element for displaying an image, such as a liquid crystal cell comprising a color filter substrate, liquid crystal and an array substrate, a backlight module, a polarizer, a driver circuit and the like. The touch panel may further comprise an optical clear resin (OCR) layer disposed between the IR layer 4 and the touch sense layer 2. The OCR layer on one hand can increase the light transmittivity, on the other hand can insulate the IR layer 4 and the touch sense layer 2 such that interference is avoided. It can be contemplated that individual components of the touch panel in real applications may be different from that shown in Fig. 1, which is for illustrative purpose only.

In the touch panel shown in Fig. 1, the IR layer 4 comprises a material that generates IR light via heat exchange (abbreviated as IR material). The IR material may absorb energy when being irradiated so as to emit IR light with a wavelength typically of 0.77µm ∼ 1mm. Moreover, the intensity of the IR light may be controlled through particle size, surface morphology and content of the available ingredient of the IR material.

The above IR material may be a mixture of one or more of biochar, tourmaline ([Na,K,Ca][Mg,F,Mn,Li,Al]₃[Al,Cr,Fe,V]₆[BO₃]₃[Si₆O₁₈][OH,F]₄), far-infrared (far-IR) ceramic, jade powder, aluminum oxide, copper(II) oxide, silver(I,III) oxide and silicon carbide. The particle size of the IR material may be for example in the order of a nanometer to a micrometer.

As shown in Fig. 1, the IR layer 4 may be disposed (such as via sputtering and other coating methods) between the cover plate 1 and the touch sense layer 2. For example, the IR layer 4 is disposed on a surface of the touch sense layer 2 that faces the cover plate 1. The disposition may be realized by using the following method:
coating the OCR on the touch sense layer 2;
pre-curing the coated OCR;
coating the IR layer 4 on the pre-cured OCR;
disposing the cover plate 1 on the IR layer 4 and having the cover plate 1 and the 1R layer 4 aligned; and
ultraviolet (UV) curing to form the touch panel.

As another example, the IR layer 4 may also be disposed on a surface of the cover plate 1 that faces the touch sense layer 2. The disposition may be realized in the following way:
coating and pre-curing the IR layer 4 on a surface of the cover plate 1 that faces the touch sense layer 2;
coating the OCR on the cured IR layer 4;
pre-curing the coated OCR;
disposing the cover plate 1 on the touch sense layer 2 and having them aligned by placing the side having the IR layer 4 facing the touch sense layer 2; and
UV curing to form the touch panel.

Other than the method of disposing the IR layer 4 between the cover plate 1 and the touch sense layer 2 as shown in Fig. 1, in other examples of the invention, the IR layer 4 may also be disposed between the touch sense layer 2 and the display unit layer 3. For example, the IR layer 4 is disposed on a surface of the touch sense layer 2 that faces the display unit layer 3, or on a surface of the display unit layer 3 that faces the touch sense layer 2.

It is thus seen that the IR layer 4 may be disposed on one or more components comprising the cover plate 1, the touch sense layer 2, and the display unit layer 3 shown in Fig. 1, or even on other components provided in the touch panel. Moreover, in terms of one component, the IR layer 4 may be coated on the whole surface of the component or on a part of the surface of the component, such that the part of the surface can emit IR light or the intensity of the IR light in the part of the surface can be enhanced.

Another embodiment of the invention further provides a touch panel, in which the IR material may be doped into the raw material of at least one of the individual components of the touch panel while fabricating the components, no matter the touch panel has or has not the IR layer 4. For example, the IR material is doped into the raw material of at least one of the following components: the cover plate 1, the touch sense layer 2, and the display unit layer 3. As an example, the IR material may also be mixed into the OCR in the touch panel, for example by using the following method:
uniformly mixing the IR material in the OCR according to a proportion;
coating the ORC having the IR material mixed therein on the touch sense layer 2;
pre-curing the coated OCR;
disposing the cover plate 1 on the touch sense layer 2 and having them aligned; and
UV curing to form the touch panel.

Moreover, the IR material may be surface modified, such that the IR material is compatible and has optimal matching property with the corresponding structure of the touch panel, so as to prevent the introduction of the IR material from affecting the performance of the LCD. The purpose of the surface modification is to modify the surface morphology, grain boundary structure of the IR material, such that the IR material can be compatible with the corresponding structure of the touch panel and does not harm the performance of the touch panel. Meanwhile, a further purpose of the surface modification is to change the activity of the IR material and to improve the heat exchange capacity by modifying the surface morphology, grain boundary structure of the IR material, such that the far-IR light of a specific wavelength is emitted with higher emissivity.

Still another embodiment of the invention provides a surface modification method for an IR material, the method comprises the following steps:
1) nanocrystallizing the IR material to obtain nanoparticles of the IR material; and
2) modifying surface property of the nanocrystallized nanoparticles such that the nanoparticles are compatible and have matching property with a structural layer of a liquid crystal cell and emit IR light when being irradiated.

The purpose of step 1) is to nanocrystallize the IR material to obtain the nanoparticles of the IR material. For fabricating nanomaterial, conventional grinding and dispersion methods may be used, for example, in an organic solvent by using a conventional grinding device (such as a ball mill, a sand mill or the like) and a dispersant. A weight percentage of the IR material in the nano dispersion solution may be 10∼15%. As an example, the step 1) comprises grinding and dispersing the IR material to obtain a nano dispersion solution of the IR material with an average particle size of 1nm to 200nm.

The purpose of step 2) is to modify the surface property of the nanocrystallized nanoparticles such that the IR material is compatible with the corresponding structure of the liquid crystal cell and does not harm the performance of the display device. Meanwhile, a further purpose of the step 2) is to change the activity of the IR material and to improve the heat exchange capacity by further modifying the surface of the nanocrystallized IR material, such that the far-IR light of a specific wavelength is emitted with higher emissivity. As an example, the step 2) comprises:
mixing the dispersion solution of the IR material with an organic solution containing methyl methacrylate, styrene, maleimide, and then adding an azo-initiator solution into the mixture; and
after the reaction is finished, adding a cooling organic solvent to cool and stirring until resultant is cooled, then filtering and drying the resultant to obtain the surface modified IR material.

As another example, the step 2) comprises:
dissolving azo-initiator, such as 2,2'-Azobis-(2-methylbutyro nitrile), azobis isobutyro nitrile (AIBN), azobis isohexyl nitrile, 2,2'-Azobis isohepto nitrile or the like, in an organic solvent for further use;
placing the nano dispersion solution of the IR material in a 4-mouth flask and performing stirring, vibration (with a frequency of above 50Hz) or shaking;
dissolving monomer including methyl methacrylate, styrene, and maleimide (the molar ratio of three monomer is 1:1∼2:1∼2/mol) in an organic solvent (with a volume ratio between the monomer and the organic solvent of 1:1∼1:3) and adding the obtained solution into the 4-mouth flask, wherein the IR material weights 8∼25%, preferably 10∼20%, and more preferably 12∼17%, of the total mixture weight;
an environmental condition for modifying the surface property of the nanocrystallized nanoparticles has a temperature of 35°C∼60°C and in a nitrogen atmosphere; the azo-initiator solution is added drop by drop with a weight of 1∼5% of total monomer weight into the 4-mouth flask, a reaction time for stirring, vibration or shaking is 30∼90 minutes;
after the reaction is finished, adding a cooling organic solvent of 5°C to 10°C to cool and stirring until resultant is cooled to room temperature;
after filtering the resultant for three times, washing the filtered solid using the aforementioned organic solution with dissolved monomer, and then drying at 70°C ∼100°C for 5∼20 minutes to obtain the surface modified IR material.

The organic solvent used in the above method may be one or more of fatty alchohol, glycol ethers, ethyl acetate, methyl ethyl ketone (MEK), 4-methylpentan-2-one, monomethyl ether acetate glycol esters, γ-butyrolactone, propionic acid-3- ether acetate, butyl carbitol, butyl carbitol acetate, propylene glycol monomethyl ether, propylene glycol monomethyl ether acetate, cyclohexane, xylene and isopropanol.

The dispersant used in the above method may be a conventional dispersant, such as BYK 410, BYK 110, BYK 163,BYK 161, BYK 2000 or the like. A weight percentage of the dispersant in the nano dispersion solution is 5∼15%, preferably 7∼12%.

A further embodiment of the invention provides a liquid crystal cell, which has a component comprising an IR material disposed therein, the IR material is obtained using the above surface modification method.

A still further embodiment of the invention provides a LCD device comprising a backlight module and any one of the above liquid crystal cell. The LCD device can be a display of a portable electronic device such as a portable PC, a mobile phone, and an E-book. The LCD device may further comprise a display module, a backlight module, a front polarizer and a rear polarizer and the like.

As the touch panel in the above embodiments has a component comprising the IR material disposed therein, the touch panel can emit IR light having relatively strong penetration and radiation capabilities when being irradiated by the backlight module or ambient light (such as solar light) providing irradiation for the touch panel. When absorbed by the human body, the IR light may cause the in vivo water molecules to resonate, such that the water molecules are activated and the bonding force between the water molecules is increased. As a result, bio-macromolecules such as protein are activated and the bio-cells are in a higher vibrating energy level. As the bio-cells are resonating with each other, the far-IR thermal energy can be transferred to a deeper endermic location of the human body. The temperature at the deeper location therefore increases, and the generated heat is dissipated from inside toward outside, which will expand capillary vessels and facilitate blood circulation, thereby enhancing the metabolism between tissues, increasing regeneration capability of the tissues, and improving immune competence of the body. Such procedure is beneficial for the heath and can reduce the influence of electromagnetic radiation on the human body. Similarly, in the LCD device comprising the touch panel of the invention, the touch panel can emit IR light to the exterior of the LCD device when being irradiated by the backlight or ambient light (such as solar light), which makes the LCD device beneficial for the heath. Moreover, the surface modified IR material can realize compatibility and optimal performance matching with the touch panel structure, which will improve the heat exchange capability between the IR material and the backlight as well the ambient light without compromising the performance of the LCD device, and the surface modified IR material will emit far-IR light with higher emissivity.

What are described above is related to the illustrative embodiments of the disclosure only and not limitative to the scope of the disclosure; the scopes of the disclosure are defined by the accompanying claims.

## Claims

1. A surface modification method for an infrared, IR, material, comprising:
nanocrystallizing the IR material to obtain nanoparticles of the IR material;
**characterized by**
modifying a surface property of the nanocrystallized nanoparticles, such that the nanoparticles are compatible and have matching property with a corresponding structural layer of a liquid crystal cell and emit IR light when being irradiated by light;
wherein modifying the surface property of the nanocrystallized nanoparticles comprises:
mixing the dispersion solution of the IR material with an organic solvent containing methyl methacrylate, styrene, maleimide, and then adding an azo-initiator solution into the mixture; and
after the reaction is finished, adding a cooling organic solvent to cool and stirring until resultant is cooled, then filtering and drying the resultant to obtain the surface modified IR material.

2. The method of claim 1, wherein nanocrystallizing the IR material comprises grinding and dispersing the IR material to obtain a dispersion solution of the IR material with an average particle size of 1nm to 200nm.

3. The method of claim 1, wherein the molar ratio between methyl methacrylate, styrene and maleimide is 1:1-2:1-2, the IR material weights 8-25% of the total mixture weight; and the azo-initiator solution is added drop by drop with a weight of 1-5% of total monomer weight.

4. The method of claim 1, wherein an environmental condition for modifying the surface property of the nanocrystallized nanoparticles has a temperature of 35°C-60°C and in a nitrogen atmosphere;
a reaction time is 30 minutes to 90 minutes;
a temperature of the cooling organic solvent is 5°C to 10°C;
cooling is performed till room temperature;
filtering is performed for three times; and
drying is performed for 5 minutes to 20 minutes at 70°C to 100°C.

5. An IR material obtained by using the surface modification method of any of claims 1 to 4.

6. A touch panel, comprising:
an IR layer (4) made of the IR material according to claim 5 which is disposed in the touch panel, wherein the IR material emits IR light when being irradiated,
a cover plate (1),
a touch sense layer (2), and
a display unit layer (3), wherein
the IR layer (4) is disposed between the cover plate (1) and the touch sense layer (2); and/or
the IR layer (4) is disposed between the touch sense layer (2) and the display unit layer (3).

7. The touch panel of claim 6, when the IR layer (4) is disposed between the cover plate (1) and the touch sense layer (2),
the IR layer (4) is disposed on a surface of the touch sense layer (2) that faces the cover plate (1); or
the IR layer (4) is disposed on a surface of the cover plate (1) that faces the touch sense layer (2).

8. The touch panel of claim 6, when the IR layer (4) is disposed between the touch sense layer (2) and the display unit layer (3),
the IR layer (4) is disposed on a surface of the touch sense layer (2) that faces the display unit layer (3); or
the IR layer (4) is disposed on a surface of the display unit layer (3) that faces the touch sense layer (2).

9. The touch panel of any of claims 6 to 8, further comprising an optical clear resin layer disposed between the IR layer (4) and the touch sense layer (2).

10. The touch panel of claim 6, wherein the IR layer (4) is disposed on all or a part of the surface of the at least one of the cover plate (1), the touch sense layer (2), and the display unit layer (3).

11. The touch panel of claim 6, wherein at least one of the cover plate (1), the touch sense layer (2), and the display unit layer (3) is made of a material containing an IR material.

12. The touch panel of claim 6 wherein the IR material is a mixture of one or more of biochar, tourmaline, far-infrared ceramic, jade powder, aluminum oxide, copper(II) oxide, silver(I,III) oxide and silicon carbide, and/or
wherein a particle size of the IR material is in the order of a nanometer to a micrometer, and/or
wherein the IR material is surface modified so as to emit IR light when being irradiated.

## Patentansprüche

1. Oberflächenmodifizierungsverfahren für ein Infrarot-, IR-, Material, mit:
Nanokristallisieren des IR-Materials, um Nanopartikel des IR-Materials zu erhalten;
**gekennzeichnet durch**
Modifizieren einer Oberflächeneigenschaft der nanokristallisierten Nanopartikel, sodass die Nanopartikel kompatibel sind mit und eine passende Eigenschaft zu einer entsprechenden Strukturschicht einer Flüssigkristallzelle aufweisen und IR-Licht emittieren, wenn sie mit Licht bestrahlt werden;
wobei das Modifizieren der Oberflächeneigenschaft der nanokristallisierten Nanopartikel aufweist:
Mischen der Dispersionslösung des IR-Materials mit einem organischen Lösungsmittel, das Methylmethacrylat, Styrol und Maleimid enthält, und anschließendes Zugeben einer Azo-Initiatorlösung in die Mischung; und
nach dem die Reaktion beendet ist, Zugeben eines kühlenden organischen Lösungsmittels um zu kühlen und Rühren, bis das Ergebnis abgekühlt ist, dann Filtrieren und Trocknen des Ergebnisses, um das oberflächenmodifizierte IR-Material zu erhalten.

2. Verfahren nach Anspruch 1, wobei das Nanokristallisieren des IR-Materials Mahlen und Dispergieren des IR-Materials aufweist, um eine Dispersionslösung des IR-Materials mit einer durchschnittlichen Teilchengröße von 1 nm bis 200 nm zu erhalten.

3. Verfahren nach Anspruch 1, wobei das Molverhältnis zwischen Methylmethacrylat, Styrol und Maleimid 1:1-2:1-2 beträgt, das IR-Material 8-25% des Gesamtgewichts der Mischung wiegt; und die Azo-Initiatorlösung tropfenweise mit einem Gewicht von 1-5% des Gesamtmonomergewichts zugegeben wird.

4. Verfahren nach Anspruch 1, wobei eine Umgebungsbedingung zum Modifizieren der Oberflächeneigenschaft der nanokristallisierten Nanopartikel eine Temperatur von 35°C-60°C und in einer Stickstoffatmosphäre aufweist;
eine Reaktionszeit 30 Minuten bis 90 Minuten beträgt;
eine Temperatur des kühlenden organischen Lösungsmittels beträgt 5°C bis 10°C beträgt;
Kühlen bis auf Raumtemperatur durchgeführt wird;
Filtrieren dreimal durchgeführt wird; und
Trocknen für 5 Minuten bis 20 Minuten bei 70°C bis 100°C durchgeführt wird.

5. IR-Material, erhalten durch Anwendung des Oberflächenmodifikationsverfahrens nach einem der Ansprüche 1 bis 4.

6. Ein Touch-Panel, mit:
einer IR-Schicht (4) aus dem IR-Material nach Anspruch 5, die in dem Touch-Panel angeordnet ist, wobei das IR-Material bei Bestrahlung IR-Licht emittiert,
einer Abdeckplatte (1),
einer Touch-Ssensorschicht (2), und
einer Anzeigeeinheitsschicht (3), wobei
die IR-Schicht (4) zwischen der Abdeckplatte (1) und der Touch-Sensorschicht (2) angeordnet ist; und/oder
die IR-Schicht (4) zwischen der Touch-Sensorschicht (2) und der Anzeigeeinheitsschicht (3) angeordnet ist.

7. Touch-Panel nach Anspruch 6, wenn die IR-Schicht (4) zwischen der Abdeckplatte (1) und der Touch-Sensorschicht (2) angeordnet ist,
die IR-Schicht (4) auf einer Oberfläche der Touch-Sensorschicht (2) angeordnet ist, die der Abdeckplatte (1) zugewandt ist; oder
die IR-Schicht (4) auf einer Oberfläche der Abdeckplatte (1) angeordnet ist, die der Touch-Sensorschicht (2) zugewandt ist.

8. Touch-Panel nach Anspruch 6, wenn die IR-Schicht (4) zwischen der Touch-Sensorschicht (2) und der Anzeigeeinheitsschicht (3) angeordnet ist,
die IR-Schicht (4) auf einer Oberfläche der Touch-Sensorschicht (2) angeordnet ist, die der Anzeigeeinheitsschicht (3) zugewandt ist; oder
die IR-Schicht (4) auf einer Oberfläche der Anzeigeeinheitsschicht (3) angeordnet ist, die der Touch-Sensorschicht (2) zugewandt ist.

9. Touch-Panel nach einem der Ansprüche 6 bis 8, ferner mit einer optisch klaren Harzschicht, die zwischen der IR-Schicht (4) und der Touch-Sensorschicht (2) angeordnet ist.

10. Touch-Panel nach Anspruch 6, wobei die IR-Schicht (4) auf der gesamten oder einem Teil der Oberfläche der Abdeckplatte (1) und/oder der Touch-Sensorschicht (2) und/oder der Anzeigeeinheitsschicht (3) angeordnet ist.

11. Touch-Panel nach Anspruch 6, wobei mindestens eines von der Abdeckplatte (1), der Touch-Sensorschicht (2) und der Anzeigeeinheitsschicht (3) aus einem Material hergestellt ist, das ein IR-Material enthält.

12. Touch-Panel nach Anspruch 6, wobei das IR-Material eine Mischung ist aus einem oder mehreren von Bio-Kohle, Turmalin, Ferninfrarot-Keramik, Jadepulver, Aluminiumoxid, Kupfer(II)-oxid, Silber(I,III)-oxid und Siliziumkarbid, und/oder
wobei eine Teilchengröße des IR-Materials in der Größenordnung von einem Nanometer bis zu einem Mikrometer liegt, und/oder
wobei das IR-Material oberflächenmodifiziert ist, sodass es IR-Licht emittiert, wenn es bestrahlt wird.

## Revendications

1. Procédé de modification de surface pour un matériau infrarouge, IR, comprenant :
la nanocristallisation du matériau IR afin d'obtenir des nanoparticules du matériau IR ;
**caractérisé par** :
la modification d'une propriété de surface des nanoparticules nanocristallisées de telle sorte que les nanoparticules soient compatibles, qu'elles présentent une propriété de concordance avec une couche structurelle correspondante d'une cellule de cristaux liquides et qu'elles émettent une lumière IR lorsqu'elles sont irradiées par la lumière ;
dans lequel la modification de la propriété de surface des nanoparticules nanocristallisées comprend :
le mélange de la solution de dispersion du matériau IR avec un solvant organique qui contient du méthyle méthacrylate, du styrène et de la maléimide puis l'ajout d'une solution d'initiateur azoïque dans le mélange ; et
après que la réaction est terminée, l'ajout d'un solvant organique de refroidissement pour refroidir et l'agitation jusqu'à ce que le produit résultant soit refroidi puis le filtrage et le séchage du produit résultant afin d'obtenir le matériau IR à surface modifiée.

2. Procédé selon la revendication 1, dans lequel la nanocristallisation du matériau IR comprend le meulage et la dispersion du matériau IR afin d'obtenir une solution de dispersion du matériau IR qui présente une taille de particule moyenne de 1 nm à 200 nm.

3. Procédé selon la revendication 1, dans lequel :
le rapport molaire entre le méthyle méthacrylate, le styrène et la maléimide est de 1:1-2:1-2 et le matériau IR pèse de 8 à 25 % du poids total du mélange ; et
la solution d'initiateur azoïque est ajoutée au goutte-à-goutte selon un poids de 1 à 5 % du poids total des monomères.

4. Procédé selon la revendication 1, dans lequel une condition environnementale pour modifier la propriété de surface des nanoparticules nanocristallisées est constituée par :
une température de 35 °C à 60 °C et dans une atmosphère d'azote ;
un temps de réaction compris entre 30 minutes et 90 minutes ;
une température du solvant organique de refroidissement comprise entre 5 °C et 10 °C ;
le refroidissement est réalisé jusqu'à température ambiante ;
le filtrage est réalisé trois fois ; et
le séchage est réalisé pendant 5 minutes à 20 minutes entre 70 °C et 100 °C.

5. Matériau IR obtenu en utilisant le procédé de modification de surface selon l'une quelconque des revendications 1 à 4.

6. Panneau tactile, comprenant :
une couche IR (4) constituée par le matériau IR selon la revendication 5, laquelle est disposée dans le panneau tactile, dans lequel le matériau IR émet une lumière IR lorsqu'il est irradié ;
une plaque de recouvrement (1) ;
une couche de détection de contact tactile (2) ; et
une couche d'unité d'affichage (3) ; dans lequel
la couche IR (4) est disposée entre la plaque de recouvrement (1) et la couche de détection de contact tactile (2) ; et/ou
la couche IR (4) est disposée entre la couche de détection de contact tactile (2) et la couche d'unité d'affichage (3).

7. Panneau tactile selon la revendication 6, quand la couche IR (4) est disposée entre la plaque de recouvrement (1) et la couche de détection de contact tactile (2),
la couche IR (4) est disposée sur une surface de la couche de détection de contact tactile (2) qui fait face à la plaque de recouvrement (1) ; ou
la couche IR (4) est disposée sur une surface de la plaque de recouvrement (1) qui fait face à la couche de détection de contact tactile (2).

8. Panneau tactile selon la revendication 6, quand la couche IR (4) est disposée entre la couche de détection de contact tactile (2) et la couche d'unité d'affichage (3) ;
la couche IR (4) est disposée sur une surface de la couche de détection de contact tactile (2) qui fait face à la couche d'unité d'affichage (3) ; ou
la couche IR (4) est disposée sur une surface de la couche d'unité d'affichage (3) qui fait face à la couche de détection de contact tactile (2).

9. Panneau tactile selon l'une quelconque des revendications 6 à 8, comprenant en outre une couche en résine optiquement transparente qui est disposée entre la couche IR (4) et la couche de détection de contact tactile (2).

10. Panneau tactile selon la revendication 6, dans lequel la couche IR (4) est disposée sur la totalité de la surface de l'au moins un composant constitutif pris parmi la plaque de recouvrement (1), la couche de détection de contact tactile (2) et la couche d'unité d'affichage (3) ou sur une partie de la surface de ce même composant constitutif.

11. Panneau tactile selon la revendication 6, dans lequel au moins un composant constitutif pris parmi la plaque de recouvrement (1), la couche de détection de contact tactile (2) et la couche d'unité d'affichage (3) est réalisé à partir d'un matériau qui contient un matériau IR.

12. Panneau tactile selon la revendication 6, dans lequel :
le matériau IR est un mélange d'un ou de plusieurs constituant(s) pris parmi le biocharbon, la tourmaline, la céramique des infrarouges lointains, la poudre de jade, l'oxyde d'aluminium, l'oxyde de cuivre (II), l'oxyde d'argent (I, III) et le carbure de silicium ; et/ou dans lequel
une taille de particule du matériau IR est de l'ordre d'un nanomètre à un micromètre ; et/ou dans lequel
le matériau IR est modifié en surface de telle sorte qu'il émette une lumière IR lorsqu'il est irradié.
